# EUROPEAN PATENT SPECIFICATION

(11) **EP 3 730 874 B1**
(45) Date of publication and mention of the grant of the patent: **15.06.2022**
(21) Application number: 18900877.4
(22) Date of filing: 18.12.2018
(51) Int. Cl.: F25B 41/00, F16L 41/02, F16L 47/26, F24F 1/32

(54) **METHOD FOR INSTALLING REFRIGERATION DEVICE**
VERFAHREN ZUM INSTALLIEREN EINER KÜHLVORRICHTUNG
PROCÉDÉ D'INSTALLATION DE DISPOSITIF DE RÉFRIGÉRATION

(30) Priority: 22.01.2018 JP 2018008218
(43) Date of publication of application: 28.10.2020
(73) Proprietor: DAIKIN INDUSTRIES, LTD., Osaka 530-8323 (JP)
(72) Inventor: KANAOKA Kouji, Osaka-shi, Osaka 530-8323 (JP)
(74) Representative: Hoffmann Eitle
(86) International application number: PCT/JP2018/046488
(87) International publication number: WO 2019/142575

(56) References cited:
- EP-A2- 1 191 273
- EP-A2- 2 365 253
- EP-A2- 2 365 253
- EP-A2- 2 402 667
- JP-A- H04 217 760
- JP-A- H04 332 356
- JP-A- H07 208 831
- JP-A- H11 173 604
- JP-A- 2005 326 090
- JP-A- 2005 326 090
- JP-A- 2007 232 286
- JP-A- 2008 106 933
- JP-U- H01 153 425
- KR-A- 20120 119 268

## Description

### TECHNICAL FIELD

The present invention relates to a method for installing a refrigeration apparatus.

### BACKGROUND ART

JP S63-226567 A discloses an air conditioner that is a type of a refrigeration apparatus. This type of air conditioner includes an outdoor unit that is a heat source unit and an indoor unit that is a utilization-side unit. This air conditioner includes a single outdoor unit and a plurality of indoor units connected to each other via a liquid-side connection pipe and a gas-side connection pipe. The liquid-side connection pipe and the gas-side connection pipe are each provided with a branch-off header. Each branch-off header has a single main stream passage port for connecting the outdoor unit and a plurality of branch stream passage ports for connecting the indoor units.

EP 2 402667 A2 discloses a refrigerant distribution unit for an airconditioner, including a refrigerant pipe provided on an outdoor unit side; branch refrigerant pipes provided on an indoor unit side; a distribution portion which distributes a refrigerant from the refrigerant pipe to the branch refrigerant pipes; a main unit which stores the distribution portion and includes a first side face from which the refrigerant pipe is drawn out and a second side face from which the branch refrigerant pipes are drawn out; and an electric component box. Each of the branch refrigerant pipes includes a branch gas pipe and a branch liquid pipe which are drawn out from the second side face. The adjacent branch gas pipes are disposed parallel such that lengths of the branch gas pipes increase sequentially from one toward the other, and the adjacent branch liquid pipes are disposed parallel such that lengths of the branch liquid pipes similarly increase sequentially.

JP 2005 326090 A discloses a refrigerant circuit branch unit for an air conditioner, wherein a single outdoor unit and a plurality of indoor units are connected by the refrigerant circuit via the branch unit, and refrigerant is supplied from the outdoor unit to the plurality of indoor units via the branch unit. The branch unit is composed of a casing composed of a lid body wherein a top face and a bottom face can be attached and detached.

### SUMMARY OF INVENTION

### <Technical Problem>

The air conditioner according to JP S63-226567 A requires a liquid-side branch-off header and a gas-side branch-off header in order to connect the outdoor unit and the indoor units to each other. However, analysis on the arrangement of the liquid-side branch-off header and the gas-side branch-off header has not been sufficient. For example, the liquid-side branch-off header and the gas-side branch-off header may be arranged individually. This, however, may complicate the work of installing the air conditioner.

An object of the present invention is to simplify a work of installing a refrigeration apparatus including a heat source unit and a utilization-side unit.

### <Solution to Problem>

The present invention is defined by the appended set of claims.

According to the present invention, the method for installing the refrigeration apparatus (10) performs the installation step, the first connecting step, and the second connecting step. In the first connecting step and the second connecting step, brazing, which involves use of flame, is not performed. That is, with the installation method according to the present invention, brazing, which involves use of flame, is not performed in the building (90) in which the refrigeration apparatus (10) is to be installed. Consequently, it is possible to reduce the number of steps in the work of installing the refrigeration apparatus (10) in the building (90) and to improve the safety in the work of installing the refrigeration apparatus (10) in the building (90).

### BRIEF DESCRIPTION OF DRAWINGS

FIG. 1 is a schematic cross-sectional view of a building in which an air conditioner is installed.
FIG. 2 is a piping system diagram illustrating a configuration of an air conditioner.
FIG. 3 is a plan view of a branch-off unit.
FIG. 4 is a front view of the branch-off unit.
FIG. 5 is a left side view of the branch-off unit.
FIG. 6 is a cross-sectional view of the branch-off unit taken along line VI-VI in FIG. 3.
FIG. 7 is a cross-sectional view of a mechanical pipe joint.

### DESCRIPTION OF EMBODIMENTS

The following will describe an air conditioner (10). The air conditioner (10) is a refrigeration apparatus configured to perform a vapor compression refrigeration cycle. The air conditioner (10) conditions the air in an indoor space (94) (specifically, a room or a corridor).

### -Air Conditioner-

The air conditioner (10) includes a single outdoor unit (11), six indoor units (12a to 12f), and a single branch-off unit (13). It should be noted that the numbers of outdoor units (11), indoor units (12a to 12f), and branch-off units (13) herein are described merely by way of example.

### <Configuration of Air Conditioner>

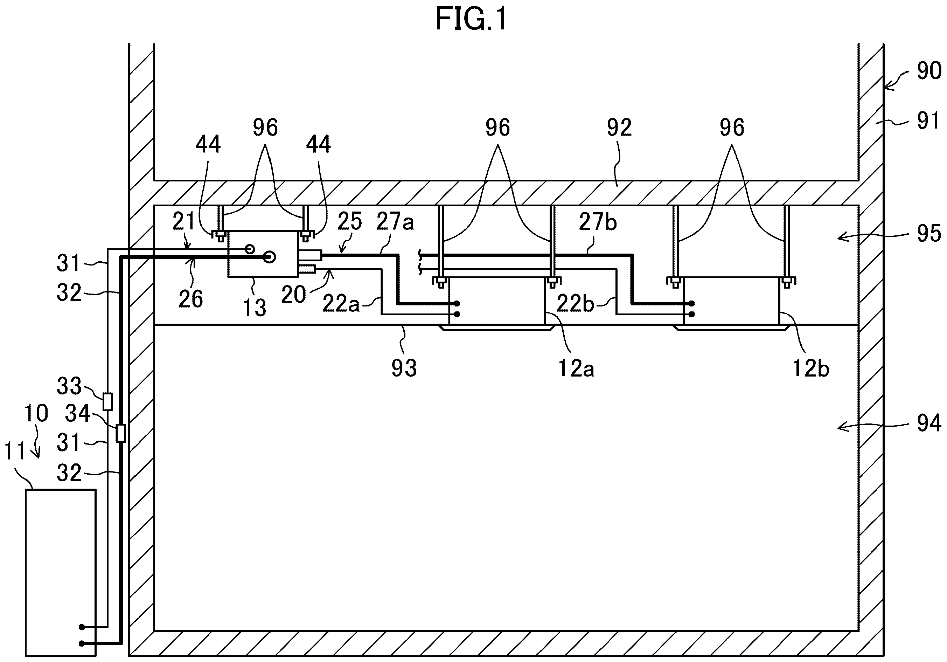

As shown in FIG. 1, the outdoor unit (11), which is a heat source unit, is installed outside a building (90). Although not illustrated, the outdoor unit (11) includes a compressor, an outdoor heat exchanger, an outdoor expansion valve, and an outdoor fan, for example.

The indoor units (12a to 12f), which are utilization-side units, are installed inside the building (90). The indoor units (12a to 12f) are ceiling-mount type. Although not illustrated, each of the indoor units (12a to 12f) includes an indoor heat exchanger, an indoor expansion valve, and an indoor fan, for example. It should be noted that all of the indoor units (12a to 12f) do not necessarily have to be the ceiling-mount type. Alternatively, part of the indoor units (12a to 12f) may be wall-mount type.

The branch-off unit (13) as well as the indoor units (12a to 12f) are installed inside the building (90). As will be described in detail later, the branch-off unit (13) includes a liquid-side header (50), a gas-side header (60), and a casing (40) in which the liquid-side header (50) and the gas-side header (60) are stored. The liquid-side header (50) is provided with a single liquid-side collecting pipe (51) and six liquid-side branch-off pipes (53a to 53f), whereas the gas-side header (60) is provided with a single gas-side collecting pipe (61) and six gas-side branch-off pipes (63a to 63f).

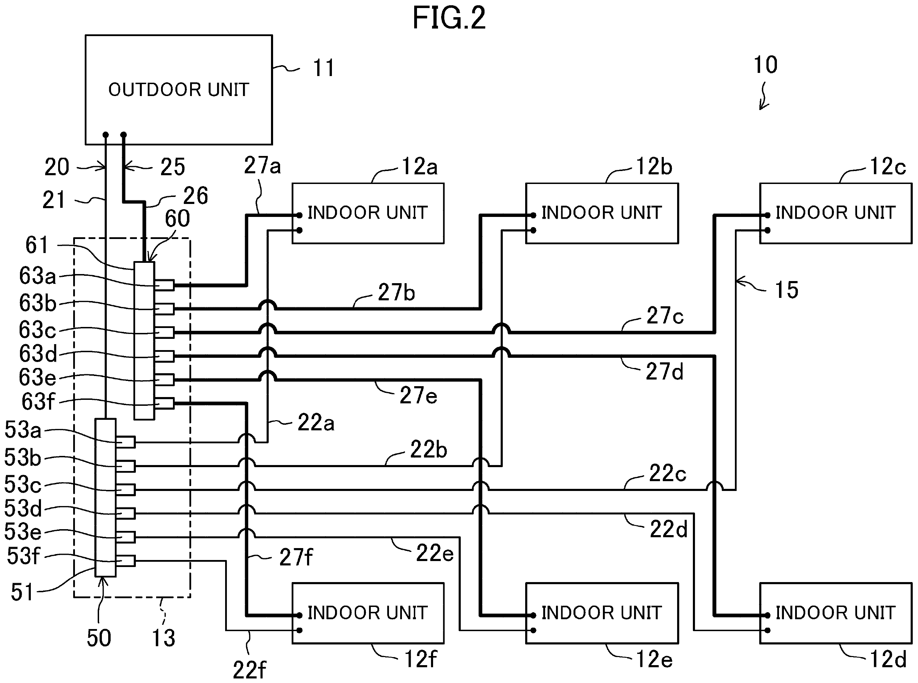

As shown in FIG. 2, the air conditioner (10) includes a refrigerant circuit (15) created by connecting the outdoor unit (11), the branch-off unit (13), and the indoor units (12a to 12f) to each other via pipes. The refrigerant circuit (15) circulates a refrigerant charged thereto, so as to perform a vapor compression refrigeration cycle.

In the refrigerant circuit (15), the outdoor unit (11) is connected to all of the indoor units (12a to 12f) via the branch-off unit (13). The outdoor unit (11) is connected to the branch-off unit (13) via a liquid-side trunk pipe (21) and a gas-side trunk pipe (26). The indoor units (12a to 12f) are connected to the branch-off unit (13) via liquid-side branch pipes (22a to 22f) and gas-side branch pipes (27a to 27f). In the refrigerant circuit (15), six indoor units (12a to 12f) are arranged in parallel.

Specifically, the outdoor unit (11) is connected to a liquid-side collecting port (52) of the liquid-side header (50) via the liquid-side trunk pipe (21), and is connected to a gas-side collecting port (62) of the gas-side header (60) via the gas-side trunk pipe (26). The first indoor unit (12a) is connected to the first liquid-side branch-off pipe (53a) of the liquid-side header (50) via the first liquid-side branch pipe (22a), and is connected to the first gas-side branch-off pipe (63a) of the gas-side header (60) via the first gas-side branch pipe (27a). The second indoor unit (12b) is connected to the second liquid-side branch-off pipe (53b) of the liquid-side header (50) via the second liquid-side branch pipe (22b), and is connected to the second gas-side branch-off pipe (63b) of the gas-side header (60) via the second gas-side branch pipe (27b). The third indoor unit (12c) is connected to the third liquid-side branch-off pipe (53c) of the liquid-side header (50) via the third liquid-side branch pipe (22c), and is connected to the third gas-side branch-off pipe (63c) of the gas-side header (60) via the third gas-side branch pipe (27c). The fourth indoor unit (12d) is connected to the fourth liquid-side branch-off pipe (53d) of the liquid-side header (50) via the forth liquid-side branch pipe (22d), and is connected to the fourth gas-side branch-off pipe (63d) of the gas-side header (60) via the fourth gas-side branch pipe (27d). The fifth indoor unit (12e) is connected to the fifth liquid-side branch-off pipe (53e) of the liquid-side header (50) via the fifth liquid-side branch pipe (22e), and is connected to the fifth gas-side branch-off pipe (63e) of the gas-side header (60) via the fifth gas-side branch pipe (27e). The sixth indoor unit (12f) is connected to the sixth liquid-side branch-off pipe (53f) of the liquid-side header (50) via the sixth liquid-side branch pipe (22f), and is connected to the sixth gas-side branch-off pipe (63f) of the gas-side header (60) via the sixth gas-side branch pipe (27f).

In the air conditioner (10), the first indoor unit (12a) and the second indoor unit (12b) have greater rated capacities than those of the other indoor units (12c to 12f). Accordingly, the first liquid-side branch pipe (22a) and the second liquid-side branch pipe (22b) are thicker than the other liquid-side branch pipes (22c to 22f), and the first gas-side branch pipe (27a) and the second gas-side branch pipe (27b) are thicker than the other gas-side branch pipes (27c to 27f). That is, the first liquid-side branch pipe (22a) and the second liquid-side branch pipe (22b) are greater in outer diameter and inner diameter than the other liquid-side branch pipes (22c to 22f), and the first gas-side branch pipe (27a) and the second gas-side branch pipe (27b) are greater in outer diameter and inner diameter than the other gas-side branch pipes (27c to 27f).

The liquid-side trunk pipe (21), the liquid-side header (50) of the branch-off unit (13), and the first to sixth liquid-side branch-off pipes (53a to 53f) constitute a liquid-side connection pipe (20) via which the outdoor unit (11) and the indoor units (12a to 12f) are connected to each other. Meanwhile, the gas-side trunk pipe (26), the gas-side header (60) of the branch-off unit (13), and the first to sixth gas-side branch-off pipes (63a to 63f) constitute a gas-side connection pipe (25) via which the outdoor unit (11) and the indoor units (12a to 12f) are connected to each other. In the above-described manner, the branch-off unit (13) is provided to the liquid-side connection pipe (20) and the gas-side connection pipe (25) of the air conditioner (10).

### <Operation of Air Conditioner>

The air conditioner (10) executes cooling operation for cooling the indoor space (94) and heating operation for heating the indoor space (94).

During cooling operation, the outdoor heat exchanger of the outdoor unit (11) functions as a condenser, and the indoor heat exchangers of the indoor units (12a to 12f) function as evaporators. Specifically, the refrigerant condensed in the outdoor unit (11) enters the liquid-side header (50) of the branch-off unit (13) through the liquid-side trunk pipe (21), and are then divided into the first to sixth liquid-side branch pipes (22f) so as to enter the indoor units (12a to 12f). Thereafter, the flows of the refrigerant absorb heat of interior air in the indoor units (12a to 12f) so as to be evaporated. The indoor units (12a to 12f) cool the air sucked from the indoor space (94) with the refrigerant, and blow the air into the indoor space (94). The flows of the refrigerant having entered the gas-side branch pipes (27a to 27f) from the indoor units (12a to 12f) enter the gas-side header (60) of the branch-off unit (13). After being merged therein, the refrigerant enters the outdoor unit (11) through the gas-side trunk pipe (26).

During heating operation, the indoor heat exchangers of the indoor units (12a to 12f) function as condensers, and the outdoor heat exchanger of the outdoor unit (11) functions as an evaporator. Specifically, the gas refrigerant having entered the gas-side trunk pipe (26) from the outdoor unit (11) enters the gas-side header (60) of the branch-off unit (13), and are then divided into the first to sixth gas-side branch pipes (27a to 27f) so as to enter the indoor units (12a to 12f). Thereafter, the flows of the gas refrigerant emit heat to the interior air in the indoor units (12a to 12f) so as to be condensed. The indoor units (12a to 12f) heat the air sucked from the indoor space (94) with the refrigerant, and blow the air into the indoor space (94). The flows of the refrigerant having entered the liquid-side branch pipes (22a to 22f) from the indoor units (12a to 12f) enter the liquid-side header (50) of the branch-off unit (13). After being merged therein, the refrigerant enters the outdoor unit (11) through the liquid-side trunk pipe (21).

### -Branch-Off Unit-

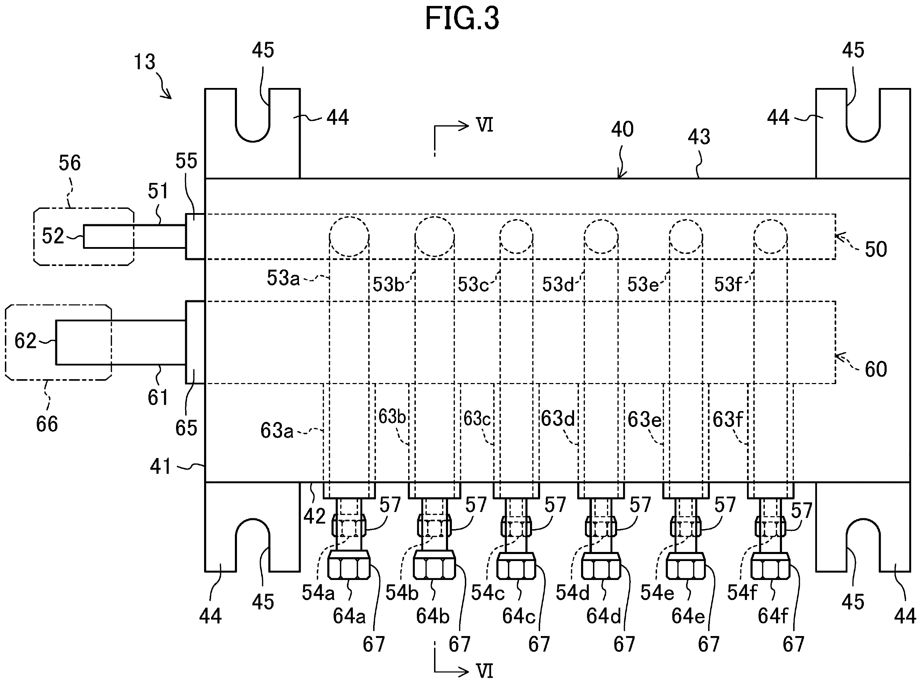

As described above, the branch-off unit (13) includes the liquid-side header (50), the gas-side header (60), and the casing (40) in which the liquid-side header (50) and the gas-side header (60) are stored. The description here deals with a detailed configuration of the branch-off unit (13) with reference to FIGS. 3 to 7.

### <Liquid-Side Header>

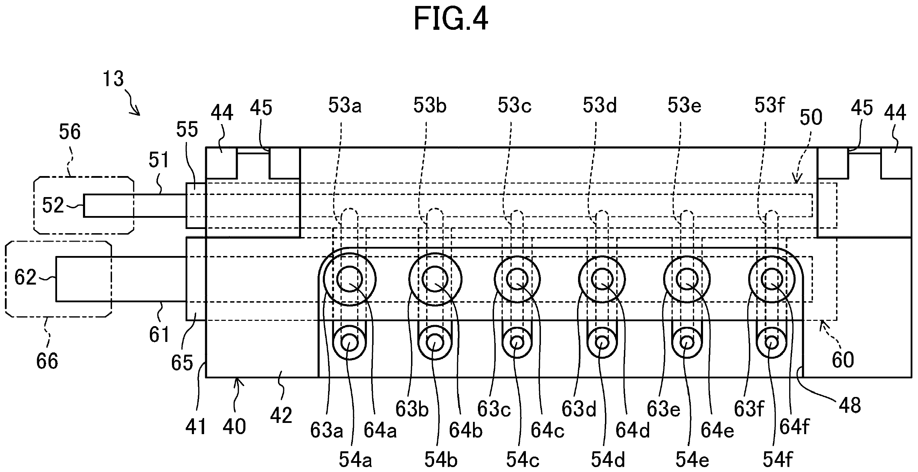

As shown in FIGS. 3 and 4, the liquid-side header (50) includes a single liquid-side collecting pipe (51) and six liquid-side branch-off pipes (53a to 53f). The liquid-side header (50) is covered with a heat insulator (55). It should be noted that the number of liquid-side branch-off pipes (53a to 53f) herein is described merely by way of example.

The liquid-side collecting pipe (51) is a straight copper pipe having a first end that is closed. The liquid-side collecting pipe (51) has a second end that is opened and that functions as the liquid-side collecting port (52). To the second end of the liquid-side collecting pipe (51), a mechanical pipe joint (56) is attached. The mechanical pipe joint (56) will be described later. The liquid-side collecting pipe (51) is connected to the liquid-side trunk pipe (21) via the mechanical pipe joint (56). Namely, the liquid-side header (50) is configured such that the liquid-side collecting port (52) is connected to the liquid-side trunk pipe (21).

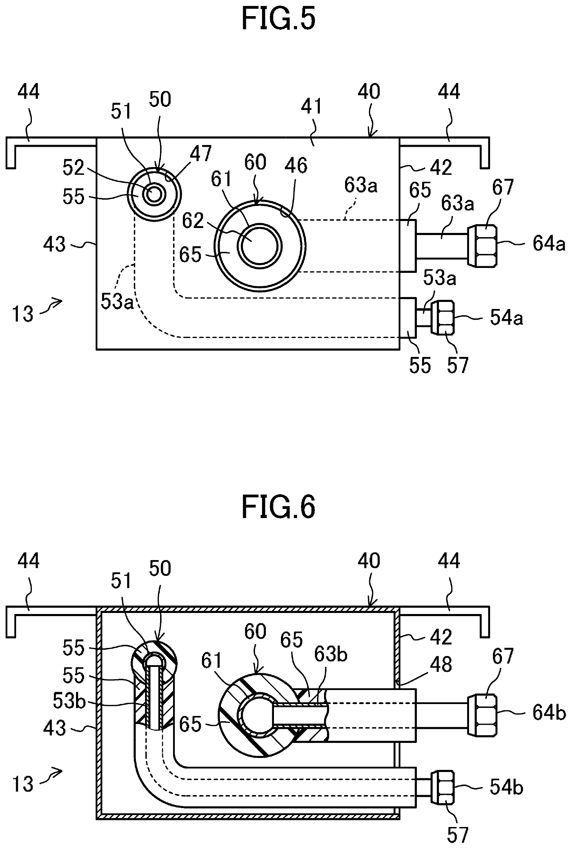

As shown in FIGS. 5 and 6, each of the liquid-side branch-off pipes (53a to 53f) is an L-shaped copper pipe having two ends that are opened. Each of the liquid-side branch-off pipes (53a to 53f) is thinner than the liquid-side collecting pipe (51). Namely, each of the liquid-side branch-off pipes (53a to 53f) is smaller in outer diameter and inner diameter than the liquid-side collecting pipe (51). The liquid-side branch-off pipes (53a to 53f) have first ends (base ends) being connected to the liquid-side collecting pipe (51) and second ends (tip ends) functioning as liquid-side branch-off ports (54a to 54f), respectively. The liquid-side branch-off pipes (53a to 53f) protrude from the liquid-side collecting pipe (51) laterally in the substantially same direction. The liquid-side branch-off pipes (53a to 53f) are aligned in a single row at a substantially constant pitch along an axial direction of the liquid-side collecting pipe (51).

The tip end portions of the liquid-side branch-off pipes (53a to 53f) (i.e., ends of the liquid-side branch-off pipes closer to the liquid-side branch-off ports (54a to 54f)) are provided with flared pipe joints (57). The flared pipe joints (57) are not shown in FIG. 4. The liquid-side branch-off pipes (53a to 53f) are connected to the liquid-side branch pipes (22a to 22f) via the flared pipe joints (57), respectively. Specifically, the liquid-side header (50) is configured such that the first liquid-side branch-off port (54a) is connected to the first liquid-side branch pipe (22a), the second liquid-side branch-off port (54b) is connected to the second liquid-side branch pipe (22b), the third liquid-side branch-off port (54c) is connected to the third liquid-side branch pipe (22c), the fourth liquid-side branch-off port (54d) is connected to the fourth liquid-side branch pipe (22d), the fifth liquid-side branch-off port (54e) is connected to the fifth liquid-side branch pipe (22e), and the sixth liquid-side branch-off port (54f) is connected to the sixth liquid-side branch pipe (22f).

The liquid-side header (50) is provided with the first to sixth liquid-side branch-off pipes (53f) arranged in this order from the liquid-side collecting port (52) of the liquid-side collecting pipe (51) toward the closed end of the liquid-side collecting pipe (51). In the liquid-side header (50), the first liquid-side branch-off pipe (53a) and the second liquid-side branch-off pipe (53b) positioned closer to the liquid-side collecting port (52) are thicker than the other liquid-side branch-off pipes (53c to 53f). Namely, the first liquid-side branch-off pipe (53a) and the second liquid-side branch-off pipe (53b) are greater in outer diameter and inner diameter than the third to sixth liquid-side branch-off pipes (53c to 53f). It should be noted that the first liquid-side branch-off pipe (53a) and the second liquid-side branch-off pipe (53b) are equal in outer diameter and inner diameter. In addition, the third to sixth liquid-side branch-off pipes (53c to 53f) are equal in outer diameter and inner diameter.

As shown in FIG. 6, the liquid-side branch-off pipes (53a to 53f) communicate with the liquid-side collecting pipe (51). Thus, in the liquid-side header (50), the single liquid-side collecting port (52) communicates with all of the liquid-side branch-off ports (54a to 54f).

### <Gas-Side Header>

As shown in FIGS. 3 and 4, the gas-side header (60) includes the single gas-side collecting pipe (61) and the six gas-side branch-off pipes (63a to 63f). The gas-side header (60) is covered with a heat insulator (65). It should be noted that the number of gas-side branch-off pipes (63a to 63f) herein is described merely by way of example. The number of gas-side branch-off pipes (63a to 63f) is equal to the number of the liquid-side branch-off pipes (53a to 53f) of the liquid-side header (50).

The gas-side collecting pipe (61) is a straight copper pipe having a first end that is closed. The gas-side collecting pipe (61) is thicker than the liquid-side collecting pipe (51) of the liquid-side header (50). Namely, the gas-side collecting pipe (61) is greater in outer diameter and inner diameter than the liquid-side collecting pipe (51). The gas-side collecting pipe (61) has a second end that is opened and that functions as the gas-side collecting port (62). To the second end of the gas-side collecting pipe (61), a mechanical pipe joint (66) is attached. The mechanical pipe joint (66) will be described later. The gas-side collecting pipe (61) is connected to the gas-side trunk pipe (26) via the mechanical pipe joint (66). Namely, the gas-side header (60) is configured such that the gas-side collecting port (62) is connected to the gas-side trunk pipe (26).

The gas-side branch-off pipes (63a to 63f) are straight copper pipes having first and second ends that are opened. Each of the gas-side branch-off pipes (63a to 63f) is thinner than the gas-side collecting pipe (61). Namely, each of the gas-side branch-off pipes (63a to 63f) is smaller in outer diameter and inner diameter than the gas-side collecting pipe (61). The gas-side branch-off pipes (63a to 63f) have first ends (base ends) being connected to the gas-side collecting pipe (61) and second ends (tip ends) functioning as gas-side branch-off ports (64a to 64f), respectively. The gas-side branch-off pipes (63a to 63f) protrude from the gas-side collecting pipe (61) laterally in the substantially same direction. As shown in FIGS. 3 and 4, the gas-side branch-off pipes (63a to 63f) are aligned in a single row at a substantially constant pitch along an axial direction of the gas-side collecting pipe (61).

The gas-side branch-off pipes (63a to 63f) have second ends provided with flared pipe joints (67), respectively. The flared pipe joints (67) are not shown in FIG. 4. The gas-side branch-off pipes (63a to 63f) are connected to the gas-side branch pipes (27a to 27f) via the flared pipe joints (67), respectively. Specifically, the gas-side header (60) is configured such that the first gas-side branch-off port (64a) is connected to the first gas-side branch pipe (27a), the second gas-side branch-off port (64b) is connected to the second gas-side branch pipe (27b), the third gas-side branch-off port (64c) is connected to the third gas-side branch pipe (27c), the fourth gas-side branch-off port (64d) is connected to the fourth gas-side branch pipe (27d), the fifth gas-side branch-off port (64e) is connected to the fifth gas-side branch pipe (27e), and the sixth gas-side branch-off port (64f) is connected to the sixth gas-side branch pipe (27f).

The gas-side header (60) is provided with the first to sixth gas-side branch-off pipes (63a to 63f) arranged in this order from the gas-side collecting port (62) of the gas-side collecting pipe (61) toward the closed end of the gas-side collecting pipe (61). In the gas-side header (60), the first gas-side branch-off pipe (63a) and the second gas-side branch-off pipe (63b) positioned closer to the gas-side collecting port (62) are thicker than the other gas-side branch-off pipes (63c to 63f). Namely, the first gas-side branch-off pipe (63a) and the second gas-side branch-off pipe (63b) are greater in outer diameter and inner diameter than the third to sixth gas-side branch-off pipes (63c to 63f). It should be noted that the first gas-side branch-off pipe (63a) and the second gas-side branch-off pipe (63b) are equal in outer diameter and inner diameter. In addition, the third to sixth gas-side branch-off pipes (63c to 63f) are equal in outer diameter and inner diameter.

As shown in FIG. 6, the gas-side branch-off pipes (63a to 63f) communicate with the gas-side collecting pipe (61). Thus, in the gas-side header (60), the single gas-side collecting port (62) communicates with all of the gas-side branch-off ports (64a to 64f).

### <Casing>

The casing (40) is a box-shape member made of a sheet metal. The casing (40) is shaped in a rectangular parallelepiped. The casing (40) has a width, a height, and a depth that are different from each other. Of the width, height, and depth of the casing (40), the width is the longest and the height is the shortest.

As shown in FIG. 5, the casing (40) has a left side panel (41) having a large-diameter hole (46) and a small-diameter hole (47). The left side panel (41) constitutes a first side face of the casing (40). The large-diameter hole (46) is a circular through-hole via which the gas-side collecting port (62) of the gas-side header (60) is exposed. The large-diameter hole (46) is positioned at a center portion of the left side panel (41) shown in FIG. 5. The small-diameter hole (47) is a circular through-hole via which the liquid-side collecting port (52) of the liquid-side header (50) is exposed. The small-diameter hole (47) is smaller in diameter than the large-diameter hole (46). In the left side panel (41) shown in FIG. 5, the small-diameter hole (47) is positioned diagonally to the upper left of the large-diameter hole (46).

As shown in FIG. 4, the casing (40) has a front face panel (42) having a front face hole (48). The front face panel (42) constitutes a second side face of the casing (40). The front face panel (42) is substantially orthogonal to the left side panel (41). The front face hole (48) is a through-hole via which the liquid-side branch-off ports (54a to 54f) of the liquid-side header (50) and the gas-side branch-off ports (64a to 64f) of the gas-side header (60) are exposed. The front face hole (48) is shaped in a rectangle extending along the lower side of the front face panel (42). The front face hole (48) is positioned at a center portion of the lower side of the front face panel (42).

The casing (40) is provided with four hanger fittings (44). The hanger fittings (44) are coupling portions that are designed to be coupled to hanging bolts (96) for installing the casing (40). The hanger fittings (44) are respectively disposed at the upper right corner and upper left corner of the front face panel (42) and the upper right corner and upper left corner of a rear face panel (43). The hanger fittings (44) are plate-shaped members protruding laterally from the casing (40). The hanger fittings (44) have tip end portions bent downwardly in the form of hooks. The hanger fittings (44) have slits (45) through which the hanging bolts (96) are to be inserted. Each slit (45) is positioned at the center in a width direction of its corresponding hanger fitting (44), and extends from the tip end toward the base end of the hanger fitting (44).

### <Arrangement of Liquid-Side Header and Gas-Side Header>

As described above, in the branch-off unit (13), the liquid-side header (50) and the gas-side header (60) are stored in the casing (40). The liquid-side header (50) and the gas-side header (60) are fixed to the casing (40) with stays and/or the like (not shown).

In the casing (40), the liquid-side header (50) is installed such that the axial direction of the liquid-side collecting pipe (51) extends along a longitudinal direction (left-right direction in FIG. 4) of the casing (40) and the liquid-side branch-off pipes (53a to 53f) are positioned below the liquid-side collecting pipe (51). The liquid-side collecting pipe (51) has an end being closer to the liquid-side collecting port (52) and extending through the small-diameter hole (47) of the casing (40) to be exposed to the outside of the casing (40). The liquid-side branch-off pipes (53a to 53f) have base-end portions extending in a top-bottom direction to be connected to the liquid-side collecting pipe (51) and tip-end portions (i.e., portions closer to the liquid-side branch-off ports (54a to 54f)) extending laterally toward the front face panel (42) of the casing (40). The liquid-side branch-off pipes (53a to 53f) have ends being closer to the liquid-side branch-off ports (54a to 54f) and extending through the front face hole (48) of the casing (40) so as to be exposed to the outside of the casing (40).

In the casing (40), the gas-side header (60) is installed such that the axial direction of the gas-side collecting pipe (61) extends along the longitudinal direction (left-right direction in FIG. 4) of the casing (40) and the gas-side branch-off pipes (63a to 63f) extend laterally from the gas-side collecting pipe (61) toward the front face panel (42) of the casing (40). The gas-side collecting pipe (61) is positioned above the laterally extending portions of the liquid-side branch-off pipes (53a to 53f). The gas-side collecting pipe (61) has an end being closer to the gas-side collecting port (62) and extending through the large-diameter hole (46) of the casing (40) so as to be exposed to the outside of the casing (40). The gas-side branch-off pipes (63a to 63f) have ends being closer to the gas-side branch-off ports (64a to 64f) and extending through the front face hole (48) of the casing (40) so as to be exposed to the outside of the casing (40).

As illustrated in FIGS. 3 and 4, the gas-side branch-off pipes (63a to 63f) are positioned above their corresponding liquid-side branch-off pipes (53a to 53f). To be more specific, the first gas-side branch-off pipe (63a) is positioned above the first liquid-side branch-off pipe (53a), the second gas-side branch-off pipe (63b) is positioned above the second liquid-side branch-off pipe (53b), the third gas-side branch-off pipe (63c) is positioned above the third liquid-side branch-off pipe (53c), the fourth gas-side branch-off pipe (63d) is positioned above the fourth liquid-side branch-off pipe (53d), the fifth gas-side branch-off pipe (63e) is positioned above the fifth liquid-side branch-off pipe (53e), and the sixth gas-side branch-off pipe (63f) is positioned above the sixth liquid-side branch-off pipe (53f). Namely, in the branch-off unit (13), the liquid-side branch-off ports (54a to 54f) are aligned with their corresponding gas-side branch-off ports (64a to 64f) in the top-bottom direction.

### <Mechanical Pipe Joint>

As described above, the liquid-side collecting pipe (51) of the liquid-side header (50) and the gas-side collecting pipe (61) of the gas-side header (60) respectively have the mechanical pipe joints (56, 66) attached thereto. Each of the mechanical pipe joints (56, 66) is a pipe joint for mechanically connecting two pipes to each other. The mechanical pipe joint (56) attached to the liquid-side collecting pipe (51) and the mechanical pipe joint (66) attached to the gas-side collecting pipe (61) are identical in structure. It should be noted that the mechanical pipe joint (56) attached to the liquid-side collecting pipe (51) is smaller in diameter than the mechanical pipe joint (66) attached to the gas-side collecting pipe (61).

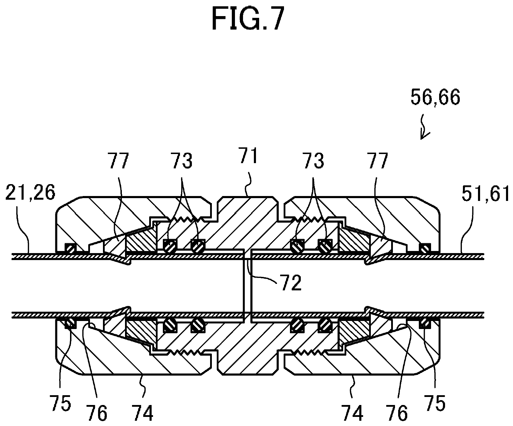

As illustrated in FIG. 7, the mechanical pipe joints (56, 66) include a single socket member (71), two nut members (74), and two ring members (77).

The socket member (71) is a tubular member having two ends where male threads are formed. The socket member (71) has an inner peripheral surface including an axially center portion where an annular projection (72) is formed. The socket member (71) is provided with O-rings (73) for sealing a space between the inner peripheral surface of the socket member (71) and the pipe inserted into the socket member (71). Two O-rings (73) are provided closer to a first end of the socket member (71), and two O-rings are provided closer to a second end of the socket member (71).

The nut members (74) are tubular members having first ends where female threads are formed. The nut members (74) have seconds ends respectively provided with O-rings (75) for sealing a space between inner peripheral surfaces of the nut members (74) and the pipe inserted into the nut member (74). The inner peripheral surfaces of the nut members (74) have tapered surfaces (76) defining diameters that increase toward the first ends of the nut members (74), where the female threads are formed.

Each of the ring members (77) is an annular member having a trapezoid cross-section. The ring members (77) have outer peripheral surfaces, which are tapered surfaces shaped along the tapered surfaces (76) of the nut members (74). One ring member (77) is disposed inside each nut member (74) such that an end of the ring member (77) having a larger outer diameter and a smaller inner diameter faces the socket member (71). Each ring member (77) is disposed such that the outer peripheral surface of the ring member (77) is in contact with the tapered surface (76) of its corresponding nut member (74).

Fastening the nut members (74) pushes the ring members (77), which are in contact with the tapered surfaces (76) of the nut members (74), toward the socket member (71). Consequently, corner portions of the ring members (77) penetrate into the pipe inserted into the socket member (71) and the nut members (74), so that the pipe inserted into the socket member (71) and the nut members (74) is coupled to the mechanical pipe joints (56, 66).

### -Method for Installing Air Conditioner-

With reference to FIG. 1, the following will describe a method for installing the air conditioner (10) to the building (90) according to the present invention.

In the installation method, an installation step is performed first. In the installation step, the outdoor unit (11) is installed outside the building (90), and the indoor units (12a to 12f) and the branch-off unit (13) are installed inside the building (90).

In the installation step of the present invention, the outdoor unit (11) is installed on the ground. The outdoor unit (11) may alternatively be installed on a roof floor of the building (90), for example.

In the installation step of the present invention, the indoor units (12a to 12f) and the branch-off unit (13) are installed in a roof space (95) created between a ceiling panel (93) and a framework (91). The hanging bolts (96), which are support members, are attached to a ceiling slab (92), which is a part of the framework (91) of the building (90). The hanging bolts (96) are bolts extending downward from the ceiling slab (92). The indoor units (12a to 12f) and the branch-off unit (13) are connected to the hanging bolts (96) so that the indoor units (12a to 12f) and the branch-off unit (13) are hung at the ceiling slab (92).

As described above, the casing (40) of the branch-off unit (13) has four hanger fittings (44) attached thereto. The branch-off unit (13) is attached to the hanging bolts (96) in the following manner. That is, the hanging bolts (96) are inserted through the slits (45) of the hanger fittings (44), and nuts are attached to the hanging bolts (96) to fix the hanger fittings (44) to the hanging bolts (96).

Next, in the installation method, a first connecting step and a second connecting step are performed. By performing the first connecting step and the second connecting step, the outdoor unit (11), the branch-off unit (13), and the indoor units (12a to 12f) are connected to each other via pipes, so as to provide a refrigerant circuit (15). One of the first connecting step and the second connecting step may be performed after completion of the other. Alternatively, the first connecting step and the second connecting step may be performed simultaneously in parallel.

In the first connecting step, the outdoor unit (11) and the branch-off unit (13) are connected to each other via the liquid-side trunk pipe (21) and the gas-side trunk pipe (26). The liquid-side trunk pipe (21) is connected to the liquid-side collecting pipe (51) of the liquid-side header (50) via the mechanical pipe joint (56). The gas-side trunk pipe (26) is connected to the gas-side collecting pipe (61) of the gas-side header (60) via the mechanical pipe joint (66).

The liquid-side trunk pipe (21) is made of a plurality of pipe members (31) connected to each other via the mechanical pipe joint (33), and the gas-side trunk pipe (26) is made of a plurality of pipe members (32) connected to each other via the mechanical pipe joint (34). The pipe members (31), which constitute the liquid-side trunk pipe (21), and the pipe members (32), which constitute the gas-side trunk pipe (26), are made by braze-bonding of a plurality of parts that are so-called hard copper pipes. These pipe members (31, 32) are manufactured in a factory or a workshop, and are carried to the building (90) where the air conditioner (10) is to be installed. On the site where the air conditioner (10) is to be installed, the liquid-side trunk pipe (21) and the gas-side trunk pipe (26) are manufactured by connecting the pipe members (31, 32) via the mechanical pipe joints (33, 34). The mechanical pipe joints (33, 34) used for connecting the pipe members (31, 32) are joints via which the pipe members (31, 32) are mechanically connected. The mechanical pipe joints (33, 34) have identical structures to those of the mechanical pipe joints (55, 56) shown in FIG. 7.

In the second connecting step, the branch-off unit (13) and the indoor units (12a to 12f) are connected to each other via the liquid-side branch pipes (22a to 22f) and the gas-side branch pipes (27a to 27f). The liquid-side branch pipes (22a to 22f) are connected to the liquid-side branch-off pipes (53a to 53f) of the liquid-side header (50) via the flared pipe joints (57), respectively. The gas-side branch pipes (27a to 27f) are connected to the gas-side branch-off pipe pipes (63a to 63f) of the gas-side header (60) via the flared pipe joints (67), respectively.

The liquid-side branch pipes (22a to 22f) and the gas-side branch pipes (27a to 27f) are seamless copper pipes made of so-called soft copper pipes. The liquid-side branch pipes (22a to 22f) and the gas-side branch pipes (27a to 27f) are made by cutting, on a site where the air conditioner (10) is to be installed, a long copper pipe carried to the site in the form of a coiled package.

Thereafter, an evacuation step of discharging the air from the refrigerant circuit (15) and a leakage check step of checking the presence or absence of refrigerant leakage from the refrigerant circuit (15) are performed. If it is confirmed there is no refrigerant leakage from the refrigerant circuit (15), test running of the air conditioner (10) is performed.

### -Technical Effects-

The branch-off unit (13) of the air conditioner (10) is provided to the liquid-side connection pipe (20) and the gas-side connection pipe (25) via which the outdoor unit (11) is connected to the indoor units (12a to 12f). The branch-off unit (13) includes: the liquid-side header (50) provided to the liquid-side connection pipe (20), the liquid-side header (50) including the single liquid-side collecting port (52) for connecting the outdoor unit (11) and the liquid-side branch-off ports (54a to 54f) for connecting the indoor units (12a to 12f), the single liquid-side collecting port (52) communicating with all of the liquid-side branch-off ports (54a to 54f); the gas-side header (60) provided to the gas-side connection pipe (25), the gas-side header (60) including the single gas-side collecting port (62) for connecting the outdoor unit (11) and the gas-side branch-off ports (64a to 64f) for connecting the indoor units (12a to 12f), the single gas-side collecting port (62) communicating with all of the gas-side branch-off ports (64a to 64f); and the casing (40) in which the liquid-side header (50) and the gas-side header (60) are stored, and the branch-off unit and the indoor units (12a to 12f) are installed indoors.

The liquid-side header (50) provided to the liquid-side connection pipe (20) and the gas-side header (60) provided to the gas-side connection pipe (25) are stored in the casing (40), thereby being unitized. The branch-off unit (13) in which the liquid-side header (50) and the gas-side header (60) are unitized and the indoor units (12a to 12f) of the air conditioner (10) are installed indoors. Consequently, it is possible to simplify the work of installing the air conditioner (10), as compared with the configuration in which the liquid-side header (50) and the gas-side header (60) are installed individually.

In the branch-off unit (13), the liquid-side collecting port (52) and the gas-side collecting port (62) are exposed to the outside of the casing (40) through circular holes (46, 47) of the left side panel (41) of the casing (40). Consequently, works of connecting, to the branch-off unit (13), the liquid-side trunk pipe (21) and the gas-side trunk pipe (26) extending from the outdoor unit (11) can be performed in the same direction relative to the casing (40). Therefore, it is possible to further simplify the work of installing the air conditioner (10).

In the branch-off unit (13), all of the liquid-side branch-off ports (54a to 54f) and all of the gas-side branch-off ports (64a to 64f) are exposed to the outside of the casing (40) through the front face hole (48) of the front face panel (42) of the casing (40). Consequently, works of connecting, to the branch-off unit (13), the liquid-side branch pipes (22a to 22f) and the gas-side branch pipes (27a to 27f) extending from the indoor units (12a to 12f) can be performed in the same direction relative to the casing (40). Therefore, it is possible to further simplify the work of installing the air conditioner (10).

In addition, in the casing (40) of the branch-off unit (13), the liquid-side branch-off ports (54a to 54f) and the gas-side branch-off ports (64a to 64f) are exposed to the outside of the casing (40) through the front face panel (42), rather than through the left side panel (41) through which the liquid-side collecting port (52) and the gas-side collecting port (62) are exposed. Consequently, it is possible to readily secure a space where the liquid-side trunk pipe (21) and the gas-side trunk pipe (26) for connecting the outdoor unit (11) to the branch-off unit (13) and the liquid-side branch pipes (22a to 22f) and the gas-side branch pipes (27a to 27f) for connecting the indoor units (12a to 12f) to the branch-off unit (13) are to be installed.

In the branch-off unit (13) of the liquid-side branch-off ports (54a to 54f) and the gas-side branch-off ports (64a to 64f), a liquid-side branch-off port and a gas-side branch-off port that are paired and connected to a certain one of the indoor units (12a to 12f) are aligned in the top-bottom direction. This makes it possible to easily identify portions of the branch-off unit (13) to which the liquid-side branch pipes (22a to 22f) and the gas-side branch pipes (27a to 27f) extending from the indoor units (12a to 12f) are to be connected. Consequently, it is possible to further simplify the work of installing the air conditioner (10).

In the branch-off unit (13), the liquid-side header (50) includes the liquid-side collecting pipe (51) having the first end being closed and the second end functioning as the liquid-side collecting port (52) and the liquid-side branch-off pipes (53a to 53f) protruding laterally from the liquid-side collecting pipe (51) and having the tip ends functioning as the liquid-side branch-off ports (54a to 54f), the liquid-side branch-off pipes (53a to 53f) being arranged at a certain interval along the axial direction of the liquid-side collecting pipe (51), whereas the gas-side header (60) includes the gas-side collecting pipe (61) having the first end being closed and the second end functioning as the gas-side collecting port (62) and the gas-side branch-off pipes (63a to 63f) protruding laterally from the gas-side collecting pipe (61) and having the tip ends functioning as the gas-side branch-off ports (64a to 64f), the gas-side branch-off pipes (63a to 63f) being arranged at a certain interval along the axial direction of the gas-side collecting pipe (61).

In addition, in the branch-off unit (13), the liquid-side branch-off pipes (53a to 53f) of the liquid-side header (50) include liquid-side branch-off pipes having different thicknesses, and thicker ones (53a, 53b) of the liquid-side branch-off pipes are disposed closer to the liquid-side collecting port (52). Consequently, during cooling operation of the air conditioner (10) in which the refrigerant flows from the liquid-side collecting port (52) toward the liquid-side branch-off ports (54a to 54f), a flow rate of the refrigerant flowing into liquid-side branch-off pipes closer to the liquid-side collecting port (52) (i.e., relatively thick liquid-side branch-off pipes (53a, 53b)) is secured. Meanwhile, the gas-side branch-off pipes (63a to 63f) of the gas-side header (60) include gas-side branch-off pipes having different thicknesses, and thicker ones (63a, 63b) of the gas-side branch-off pipes are disposed closer to the gas-side collecting port (62). Consequently, during heating operation of the air conditioner (10) in which the refrigerant flows from the gas-side collecting port (62) toward the gas-side branch-off ports (64a to 64f), a flow rate of the refrigerant flowing into gas-side branch-off pipes closer to the gas-side collecting port (62) (i.e., relatively thick gas-side branch-off pipes (63a, 63b)) is secured.

In the branch-off unit (13), the liquid-side header (50) includes the single mechanical pipe joint (56) for mechanically connecting the liquid-side trunk pipe (21) to the liquid-side collecting port (52) and the plurality of flared pipe joints (57) for connecting the liquid-side branch pipes (22a to 22f) to the liquid-side branch-off ports (54a to 54f), and the gas-side header (60) includes the single mechanical pipe joint (66) for mechanically connecting the gas-side trunk pipe (26) to the gas-side collecting port (62) and the plurality of flared pipe joints (67) for connecting the gas-side branch pipes (27a to 27f) to the gas-side branch-off ports (64a to 64f). Consequently, it is possible to connect the liquid-side trunk pipe (21), the gas-side trunk pipe (26), the liquid-side branch pipes (22a to 22f), and the gas-side branch pipes (27a to 27f) to the liquid-side header (50) and the gas-side header (60) without performing brazing, which involves use of flame.

In addition, the casing (40) of the branch-off unit (13) includes the hanger fitting (44) that is designed to be coupled to the hanging bolt (96) fixed to the building (90) to hang the casing (40) at the hanging bolt (96). By coupling the hanger fitting (44) of the casing (40) to the hanging bolt (96) fixed to the building (90), the branch-off unit (13) is hung at the hanging bolt (96). Consequently, it is possible to simplify the work of installing the branch-off unit (13) inside the building (90).

The method for installing the air conditioner (10) of the present invention to the building (90) performs the installation step, the first connecting step, and the second connecting step. In the installation step, the outdoor unit (11) is installed outside the building (90), and the indoor units (12a to 12f) and the branch-off unit (13) are installed inside the building (90). In the first connecting step, the outdoor unit (11) and the branch-off unit (13) are connected to each other via the liquid-side trunk pipe (21) and the gas-side trunk pipe (26), the liquid-side trunk pipe (21) being made of the pipe members (31) connected to each other via the mechanical pipe joint (33), the gas-side trunk pipe (26) being made of the pipe members (32) connected to each other via the mechanical pipe joint (34). In the second connecting step, the indoor units (12a to 12f) and the branch-off unit (13) are connected to each other via the liquid-side branch pipes (22a to 22f) and the gas-side branch pipes (27a to 27f), each of the liquid-side branch pipes (22a to 22f) and the gas-side branch pipes (27a to 27f) being made of seamless copper pipes.

In the first connecting step and the second connecting step, brazing, which involves use of flame, is not performed. That is, with this installation method, brazing, which involves use of flame, is not performed in the building (90) in which the air conditioner (10) is to be installed. Consequently, it is possible to reduce the number of steps in the work of installing the air conditioner (10) in the building (90) and to improve the safety in the work of installing the air conditioner (10) in the building (90). In addition, this method makes it possible to install the air conditioner (10) even to a building in use or a building where any work with flame is prohibited, such as a convenience store in a gas station.

### -Modifications-

An air conditioner (10) may include a plurality of branch-off units (13). In this case, in a refrigerant circuit (15), the branch-off units (13) are connected in parallel, and are connected to indoor units.

An air conditioner (10) may include a plurality of outdoor units (11). In this case, in a refrigerant circuit (15), the outdoor units (11) are connected in parallel.

In an air conditioner (10), all branch-off pipes (53a to 53f, 63a to 63f) in a branch-off unit (13) do not necessarily have to be connected to indoor units (12a to 12f). Alternatively, only part of the branch-off pipes may be connected to the indoor units. In this case, the branch-off pipes that are not connected to the indoor units are sealed with blanking covers, for example.

### INDUSTRIAL APPLICABILITY

As described above, the present invention is useful for a method for installing a refrigeration apparatus.

### REFERENCE SIGNS LIST

- 10: Air conditioner (refrigeration apparatus)
- 11: Outdoor unit (heat source unit)
- 12a to 12f: First to sixth indoor units (utilization-side units)
- 13: Branch-off unit
- 20: Liquid-side connection pipe
- 21: Liquid-side trunk pipe
- 22a to 22f: First to sixth liquid-side branch pipes
- 25: Gas-side connection pipe
- 26: Gas-side trunk pipe
- 27a to 27f: First to sixth gas-side branch pipes
- 31, 32: Pipe member
- 33, 34: Mechanical pipe joint
- 40: Casing
- 41: Left side panel (first side face)
- 42: Front face panel (second side face)
- 44: Hanger fitting (coupling portion)
- 50: Liquid-side header
- 51: Liquid-side collecting pipe
- 52: Liquid-side collecting port
- 53a to 53f: First to sixth liquid-side branch-off pipes
- 54a to 54f: First to sixth liquid-side branch-off ports
- 56: Mechanical pipe joint
- 57: Flared pipe joint
- 60: Gas-side header
- 61: Gas-side collecting pipe
- 62: Gas-side collecting port
- 63a to 63f: First to sixth gas-side branch-off pipes
- 64a to 64f: First to sixth gas-side branch-off ports
- 66: Mechanical pipe joint
- 67: Flared pipe joint
- 90: Building
- 96: Hanging bolt (support member)

## Claims

1. A method for installing a refrigeration apparatus (10) to a building (90), the refrigeration apparatus (10) including a heat source unit (11), utilization-side units (12a to 12f), and a branch-off unit (13) that is provided to a liquid-side connection pipe (20) and a gas-side connection pipe (25) via which the heat source unit (11) is connected to the utilization-side units (12a to 12f),
the branch-off unit (13) including
a liquid-side header (50) provided to the liquid-side connection pipe (20), the liquid-side header (50) including a single liquid-side collecting port (52) for connection with a pipe (21) extending to the heat source unit (11) and liquid-side branch-off ports (54a to 54f) for connection with pipes (22a to 22f) extending to the utilization-side units (12a to 12f), the single liquid-side collecting port (52) communicating with all of the liquid-side branch-off ports (54a to 54f),
a gas-side header (60) provided to the gas-side connection pipe (25), the gas-side header (60) including a single gas-side collecting port (62) for connection with a pipe (26) extending to the heat source unit (11) and gas-side branch-off ports (64a to 64f) for connection with pipes (27a to 27f) extending to the utilization-side units (12a to 12f), the single gas-side collecting port (62) communicating with all of the gas-side branch-off ports (64a to 64f), and
a casing (40) in which the liquid-side header (50) and the gas-side header (60) are stored,
the method comprising:
an installation step of installing the heat source unit (11) outside the building (90) and installing the utilization-side units (12a to 12f) and the branch-off unit (13) inside the building (90),
**characterized in that** the method further comprises:
a first connecting step of connecting the heat source unit (11) and the branch-off unit (13) to each other via a liquid-side trunk pipe (21) and a gas-side trunk pipe (26), the liquid-side trunk pipe (21) being made of a plurality of pipe members (31) connected to each other via a mechanical pipe joint (33), the gas-side trunk pipe (26) being made of a plurality of pipe members (32) connected to each other via a mechanical pipe joint (34); and
a second connecting step of connecting the utilization-side units (12a to 12f) and the branch-off unit (13) to each other via liquid-side branch pipes (22a to 22f) and gas-side branch pipes (27a to 27f), each of the liquid-side branch pipes (22a to 22f) and the gas-side branch pipes (27a to 27f) being made of seamless pipes.

2. The method according to claim 1, further comprising a branch pipe manufacturing step of manufacturing the liquid-side branch pipes (22a to 22f) and the gas-side branch pipes (27a to 27f) by cutting, on a site where the refrigeration apparatus (10) is to be installed, a long copper pipe carried to the site in a form of a coiled package, each of the liquid-side branch pipes (22a to 22f) and the gas-side branch pipes (27a to 27f) being made of seamless pipes, wherein
in the second connecting step, the utilization-side units (12a to 12f) and the branch-off unit (13) are connected to each other via the liquid-side branch pipes (22a to 22f) and the gas-side branch pipes (27a to 27f) manufactured in the branch pipe manufacturing step.

3. The method according to claim 1 or 2, wherein
the branch-off unit (13) is configured such that the liquid-side branch-off ports (54a to 54f) and the gas-side branch-off ports (64a to 64f) are respectively provided with flared pipe joints (57, 67), and
in the second connecting step, the liquid-side branch pipes (22a to 22f) are connected to the liquid-side branch-off ports (54a to 54f) via the flared pipe joints (57), respectively, and the gas-side branch pipes (27a to 27f) are connected to the gas-side branch-off ports (64a to 64f) via the flared pipe joints (67), respectively.

4. The method according to any one of claims 1 to 3, wherein the pipe members (31, 32), which constitute the liquid-side trunk pipe (21) and the gas-side trunk pipe (26) used in the first connecting step, are made by braze-bonding of a plurality of parts, and the pipe members (31, 32) manufactured in a factory or a workshop are carried into the building (90) where the refrigeration apparatus (10) is to be installed.

## Patentansprüche

1. Verfahren zum Installieren einer Kühleinrichtung (10) an einem Gebäude (90), wobei die Kühleinrichtung (10) eine Wärmequelleneinheit (11), nutzungsseitige Einheiten (12a bis 12f) und eine Abzweigungseinheit (13), die an einem flüssigkeitsseitigen Verbindungsrohr (20) und einem gasseitigen Verbindungsrohr (25) bereitgestellt ist, mittels derer die Wärmequelleneinheit (11) mit den nutzungsseitigen Einheiten (12a bis 12f) verbunden ist, beinhaltet,
die Abzweigungseinheit (13) beinhaltend
einen flüssigkeitsseitigen Verteiler (50), der dem flüssigkeitsseitigen Verbindungsrohr (20) bereitgestellt ist, wobei der flüssigkeitsseitige Verteiler (50) einen einzelnen flüssigkeitsseitigen Sammelanschluss (52) zur Verbindung mit einem Rohr (21), das sich zu der Wärmequelleneinheit (11) erstreckt, und flüssigkeitsseitige Abzweigungsanschlüsse (54a bis 54f) zur Verbindung mit Rohren (22a bis 22f), die sich zu den nutzungsseitigen Einheiten (12a bis 12f) erstrecken, beinhaltet, wobei der einzelne flüssigkeitsseitige Sammelanschluss (52) mit all den flüssigkeitsseitigen Abzweigungsanschlüssen (54a bis 54f) kommuniziert,
einen gasseitigen Verteiler (60), der dem gasseitigen Verbindungsrohr (25) bereitgestellt ist, wobei der gasseitige Verteiler (60) einen einzelnen gasseitigen Sammelanschluss (62) zur Verbindung mit einem Rohr (26), das sich zu der Wärmequelleneinheit (11) erstreckt, und gasseitige Abzweigungsanschlüsse (64a bis 64f) zur Verbindung mit Rohren (27a bis 27f), die sich zu den nutzungsseitigen Einheiten (12a bis 12f) erstrecken, beinhaltet, wobei der einzelne gasseitige Sammelanschluss (62) mit all den gasseitigen Abzweigungsanschlüssen (64a bis 64f) kommuniziert, und
ein Gehäuse (40), in dem der flüssigkeitsseitige Verteiler (50) und der gasseitige Verteiler (60) verstaut sind,
das Verfahren umfassend:
einen Installationsschritt zum Installieren der Wärmequelleneinheit (11) außerhalb des Gebäudes (90) und Installieren der nutzungsseitigen Einheiten (12a bis 12f) und der Abzweigungseinheit (13) innerhalb des Gebäudes (90),
**dadurch gekennzeichnet, dass** das Verfahren weiter umfasst:
einen ersten Verbindungsschritt zum Verbinden der Wärmequelleneinheit (11) und der Abzweigungseinheit (13) miteinander über ein flüssigkeitsseitiges Hauptrohr (21) und ein gasseitiges Hauptrohr (26), wobei das flüssigkeitsseitige Hauptrohr (21) aus einer Vielzahl von Rohrelementen (31) hergestellt ist, die miteinander über eine mechanische Rohrverbindung (33) verbunden sind, wobei das gasseitige Hauptrohr (26) aus einer Vielzahl von Rohrelementen (32) hergestellt ist, die miteinander über eine mechanische Rohrverbindung (34) verbunden sind; und
einen zweiten Verbindungsschritt zum Verbinden der nutzungsseitigen Einheiten (12a bis 12f) und der Abzweigungseinheit (13) miteinander über flüssigkeitsseitige Abzweigungsrohre (22a bis 22f) und gasseitige Abzweigungsrohre (27a bis 27f), wobei jedes der flüssigkeitsseitigen Abzweigungsrohre (22a bis 22f) und der gasseitigen Abzweigungsrohre (27a bis 27f) aus nahtlosen Rohren hergestellt ist.

2. Verfahren nach Anspruch 1, weiter umfassend einen Abzweigungsrohrfertigungsschritt zum Fertigen der flüssigkeitsseitigen Abzweigungsrohre (22a bis 22f) und der gasseitigen Abzweigungsrohre (27a bis 27f) durch Schneiden, an einem Einsatzort, wo die Kühleinrichtung (10) installiert werden soll, eines langen Kupferrohrs, das in einer Form eines aufgewickelten Packstücks an den Einsatzort befördert wird, wobei jedes der flüssigkeitsseitigen Abzweigungsrohre (22a bis 22f) und der gasseitigen Abzweigungsrohre (27a bis 27f) aus nahtlosen Rohren hergestellt ist, wobei
in dem zweiten Verbindungsschritt die nutzungsseitigen Einheiten (12a bis 12f) und die Abzweigungseinheit (13) miteinander über die flüssigkeitsseitigen Abzweigungsrohre (22a bis 22f) und die gasseitigen Abzweigungsrohre (27a bis 27f), die in dem Abzweigungsrohrfertigungsschritt hergestellt werden, verbunden sind.

3. Verfahren nach Anspruch 1 oder 2, wobei
die Abzweigungseinheit (13) so ausgelegt ist, dass die flüssigkeitsseitigen Abzweigungsanschlüsse (54a bis 54f) beziehungsweise die gasseitigen Abzweigungsanschlüsse (64a bis 64f) mit ausgestellten Rohrverbindungen (57, 67) bereitgestellt sind, und
in dem zweiten Verbindungsschritt die flüssigkeitsseitigen Abzweigungsrohre (22a bis 22f) mit den flüssigkeitsseitigen Abzweigungsanschlüssen (54a bis 54f) über die ausgestellten Rohrverbindungen (57) verbunden sind und die gasseitigen Abzweigungsrohre (27a bis 27f) mit den gasseitigen Abzweigungsanschlüssen (64a bis 64f) über die ausgestellten Rohrverbindungen (67) verbunden sind.

4. Verfahren nach einem der Ansprüche 1 bis 3, wobei die Rohrelemente (31, 32), die das flüssigkeitsseitige Hauptrohr (21) und das gasseitige Hauptrohr (26) begründen, die in dem ersten Verbindungsschritt verwendet werden, durch Hartlöten einer Vielzahl von Teilen hergestellt werden und die Rohrelemente (31, 32), die in einer Fabrik oder einer Werkstatt gefertigt werden, in das Gebäude (90) getragen werden, wo die Kühleinrichtung (10) installiert werden soll.

## Revendications

1. Procédé d'installation d'un appareil de réfrigération (10) dans un bâtiment (90), l'appareil de réfrigération (10) incluant une unité source de chaleur (11), des unités côté utilisation (12a à 12f) et une unité de ramification (13) qui est fournie à un tuyau de liaison côté liquide (20) et à un tuyau de liaison côté gaz (25) via lesquels l'unité source de chaleur (11) est reliée aux unités côté utilisation (12a à 12f),
l'unité de ramification (13) incluant
un collecteur côté liquide (50) fourni au tuyau de liaison côté liquide (20), le collecteur côté liquide (50) incluant un unique orifice de collecte côté liquide (52) pour la liaison avec un tuyau (21) s'étendant vers l'unité source de chaleur (11) et des orifices de ramification côté liquide (54a à 54f) pour une liaison avec des tuyaux (22a à 22f) s'étendant vers les unités côté utilisation (12a à 12f), l'unique orifice de collecte côté liquide (52) communiquant avec tous les orifices de ramification côté liquide (54a à 54f),
un collecteur côté gaz (60) fourni au tuyau de liaison côté gaz (25), le collecteur côté gaz (60) incluant un unique orifice de collecte côté gaz (62) pour une liaison avec un tuyau (26) s'étendant vers l'unité source de chaleur (11) et des orifices de ramification côté gaz (64a à 64f) pour une liaison avec des tuyaux (27a à 27f) s'étendant vers les unités côté utilisation (12a à 12f), l'unique orifice de collecte côté gaz (62) communiquant avec tous les orifices de ramification côté gaz (64a à 64f), et
un boîtier (40) dans lequel le collecteur côté liquide (50) et le collecteur côté gaz (60) sont stockés,
le procédé comprenant :
une étape d'installation consistant à installer l'unité source de chaleur (11) hors du bâtiment (90) et installer les unités côté utilisation (12a à 12f) et l'unité de ramification (13) à l'intérieur du bâtiment (90),
**caractérisé en ce que** le procédé comprend en outre :
une première étape de liaison consistant à relier l'unité source de chaleur (11) et l'unité de ramification (13) l'une à l'autre via un tuyau d'acheminement côté liquide (21) et un tuyau d'acheminement côté gaz (26), le tuyau d'acheminement côté liquide (21) étant fait d'une pluralité d'éléments de tuyau (31) reliés les uns aux autres via un joint mécanique de tuyau (33), le tuyau d'acheminement côté gaz (26) étant fait d'une pluralité d'éléments de tuyau (32) reliés les uns aux autres via un joint mécanique de tuyau (34) ; et
une seconde étape de liaison consistant à relier les unités côté utilisation (12a à 12f) et l'unité de ramification (13) l'une à l'autre via des tuyaux de raccordement côté liquide (22a à 22f) et des tuyaux de raccordement côté gaz (27a à 27f), chacun des tuyaux de raccordement côté liquide (22a à 22f) et des tuyaux de raccordement côté gaz (27a à 27f) étant fait de tuyaux sans soudure.

2. Procédé selon la revendication 1, comprenant en outre une étape de fabrication de tuyaux de raccordement consistant à fabriquer les tuyaux de raccordement côté liquide (22a à 22f) et les tuyaux de raccordement côté gaz (27a à 27f) en coupant, sur un site où l'appareil de réfrigération (10) doit être installé, un long tuyau de cuivre transporté jusqu'au site sous une forme de paquet enroulé, chacun des tuyaux de raccordement côté liquide (22a à 22f) et des tuyaux de raccordement côté gaz (27a à 27f) étant fait de tuyaux sans soudure, dans lequel
dans la seconde étape de liaison, les unités côté utilisation (12a à 12f) et l'unité de ramification (13) sont reliées les unes aux autres via les tuyaux de raccordement côté liquide (22a à 22f) et les tuyaux de raccordement côté gaz (27a à 27f) fabriqués dans l'étape de fabrication de tuyaux de raccordement.

3. Procédé selon la revendication 1 ou 2, dans lequel
l'unité de ramification (13) est configurée de sorte que les orifices de ramification côté liquide (54a à 54f) et les orifices de ramification côté gaz (64a à 64f) soient respectivement dotés de joints de tuyau évasés (57, 67), et
dans la seconde étape de liaison, les tuyaux de raccordement côté liquide (22a à 22f) sont reliés aux orifices de ramification côté liquide (54a à 54f) via les joints de tuyau évasés (57), respectivement, et les tuyaux de raccordement côté gaz (27a à 27f) sont reliés aux orifices de ramification côté gaz (64a à 64f) via les joints de tuyau évasés (67), respectivement.

4. Procédé selon l'une quelconque des revendications 1 à 3, dans lequel les éléments de tuyau (31, 32), qui constituent le tuyau d'acheminement côté liquide (21) et le tuyau d'acheminement côté gaz (26) utilisés dans la première étape de liaison, sont faits par assemblage par brasage d'une pluralité de pièces, et les éléments de tuyau (31, 32) fabriqués dans une usine ou un atelier sont transportés dans le bâtiment (90) où l'appareil de réfrigération (10) doit être installé.
